# EUROPEAN PATENT SPECIFICATION

(11) **EP 3 657 292 B1**
(45) Date of publication and mention of the grant of the patent: **16.06.2021**
(21) Application number: 20151345.4
(22) Date of filing: 15.05.2014
(51) Int. Cl.: G05D 1/02

(54) **AUTOMATIC SENSITIVITY ADJUSTMENT IN OBJECT DETECTION SYSTEM**
AUTOMATISCHE EMPFINDLICHKEITSEINSTELLUNG IN EINEM OBJEKTERKENNUNGSSYSTEM
RÉGLAGE AUTOMATIQUE DE LA SENSIBILITÉ DANS UN SYSTÈME DE DÉTECTION D'OBJET

(43) Date of publication of application: 27.05.2020
(62) Divisional of application: 14728106.7
(73) Proprietor: HUSQVARNA AB, 561 82 Huskvarna (SE)
(72) Inventor: HOLGERSSON, Jonas, 561 40 HUSKVARNA (SE)

(56) References cited:
- EP-A1- 2 408 291
- DE-A1-102005 046 054
- DE-A1-102010 060 347

## Description

### TECHNICAL FIELD

Example embodiments generally relate to robotic devices and, more particularly, relate to a robotic device that is configurable to operate within a predefined area while detecting objects using a combination of contact sensors and contactless sensors in which a sensitivity of the contactless sensors is automatically adjustable.

### BACKGROUND

Yard maintenance tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines and are relatively inexpensive. Meanwhile, at the other end of the spectrum, riding lawn mowers, such as lawn tractors, can be quite large. More recently, robotic mowers and/or remote controlled mowers have also become options for consumers to consider.

Robotic mowers are typically capable of transiting over even and uneven terrain to execute yard maintenance activities relating to mowing. They may be programmed to stay within a defined area while performing their mowing tasks, and may even be configured to detect various objects in the defined area. When contact sensors are employed, the objects are detected by contacting or running into the objects. For low speed operation, this may not present any problem. However, if a faster robotic mower is desired, then the speed may be a disadvantage in that contact at high speed may damage the robotic mower or the object that the robotic mower contacts (e.g., lawn furniture, toys, plants, etc.).

To avoid high speed collisions, a ranged object detection system may be employed. Ranged object detection may be employed using contactless sensors such as optical or ultrasonic sensors. These sensors may enable the robotic mower to detect objects without striking them. When an object is detected, the robotic mower may stop or turn away from the object, or lower its speed to allow a gentle impact.

Contactless sensors may detect objects via active or passive means. When active means are employed, the contactless sensor may transmit a signal (e.g., a laser or ultrasonic signal) and detect returns that are received after the signal reflects off an object. The detection components, which may include an antenna or camera and corresponding receiver circuitry may include sensitivity settings that impact the ability of the contactless sensor to detect objects. When sensitivity is high, small return signals can be detected as returns are generally amplified. When sensitivity is low, small return signals are less likely to be detected as amplification is smaller. Lower sensitivity may be set to avoid overdriving receiver circuitry when strong return signals are received.

As may be appreciated from the description above, sensitivity may be set by the operator to make the device more or less sensitive to object detection and avoidance. However, some operators may not want to make such adjustments or may find making adjustments tedious or complicated. Thus, a fixed sensitivity setting may be provided. Regardless of how the sensitivity is set, when sensitivity is too high, the contactless sensor may make a high number of false detections or ghost detections and end up stopping or steering away from non-existent objects with a high frequency. If sensitivity is too low, the device will not detect real obstacles with the contactless sensors, causing high speed collisions. Both these cases may be disturbing to operators and/or may inhibit efficient operation of the device.

DE 10 2010 060347 A1 describes an automatic floor cleaning, and/or floor suction having a contactless sensor for measuring distance to an object and a second sensor measuring impact.

DE 10 2005 046054 A1 describes a device and method for assisting a parking process of a vehicle, typically for an automobile equipped with sensors for distance measuring with different sensitivity.

EP1968025 A1 describes a system and method for improving infrared detector performance in dual detector system, a non-robotic sensorsystem.

### BRIEF SUMMARY OF SOME EXAMPLES

Some example embodiments may therefore provide a robotic lawnmower that can employ automatic sensitivity adjustment based on environmental conditions. In some cases, the robotic lawnmower may utilize contact sensor input as an aid for performing automatic contactless sensor sensitivity adjustment.

In an example embodiment, a robotic lawnmower is provided. The robotic lawnmower may include a positioning module configured to direct movement of the robotic lawnmower, and an object detection module configured to detect objects proximate to the robotic lawnmower. The object detection module may include a contact sensor and a contactless sensor. Sensitivity of the contactless sensor of the object detection module may be configured to be automatically adjustable based on input from the contact sensor.

In another example embodiment, a method of controlling a robotic lawnmower may be provided. The method may include receiving, via processing circuitry of a robotic lawnmower, information indicative of an object detection event associated with one of a contact sensor or a contactless sensor while the robotic lawnmower transits a parcel, making a determination as to whether the object detection event corresponds to a false detection event, and determining whether to adjust sensitivity of the contactless sensor based on the determination.

Some example embodiments may improve the ability of robotic lawnmowers to perform tasks accurately and/or efficiently.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates an example operating environment for a robotic mower that may employ an example embodiment;
FIG. 2A illustrates a schematic view of a base plate and various components of the robotic mower according to an example embodiment;
FIG. 2B illustrates a schematic view of an inner housing and various other components of the robotic mower according to an example embodiment;
FIG. 3 illustrates a block diagram of various components of processing circuitry of the robotic mower to illustrate some of the components that enable the functional performance of the robotic mower and to facilitate description of an example embodiment;
FIG. 4 illustrates a side view of the robotic vehicle to show an emission pattern of a contactless sensor such as a ultrasonic sensor in accordance with an example embodiment;
FIG. 5 illustrates a graph of return signals in accordance with an example embodiment; and
FIG. 6 illustrates a block diagram of a method according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. Additionally, the term "yard maintenance" is meant to relate to any outdoor grounds improvement or maintenance related activity and need not specifically apply to activities directly tied to grass, turf or sod care. As used herein, operable coupling should be understood to relate to direct or indirect connection that, in either case, enables functional interconnection of components that are operably coupled to each other.

In an example embodiment, a robotic lawnmower is provided with an object detection module. The object detection module may be configured to detect objects encountered by the device during operation using contact sensors and/or contactless sensors. Responsive to detection of an object via a contactless sensor, the object detection module may be configured to instruct the robotic vehicle to reduce speed (but otherwise not stop or turn away from a potential object). Thereafter, if no object detection occurs for the contact sensor, the object detection by the contactless sensor may be determined to be a false detection. The number of false detections may be tracked and, if the number of false detections reaches a threshold level, a sensitivity adjustment may be made to reduce the sensitivity of the contactless sensor so that less false detections occur. In other cases, sensitivity may be adjusted in response to too many high speed collisions or in response to very few false detections, as described in greater detail below.

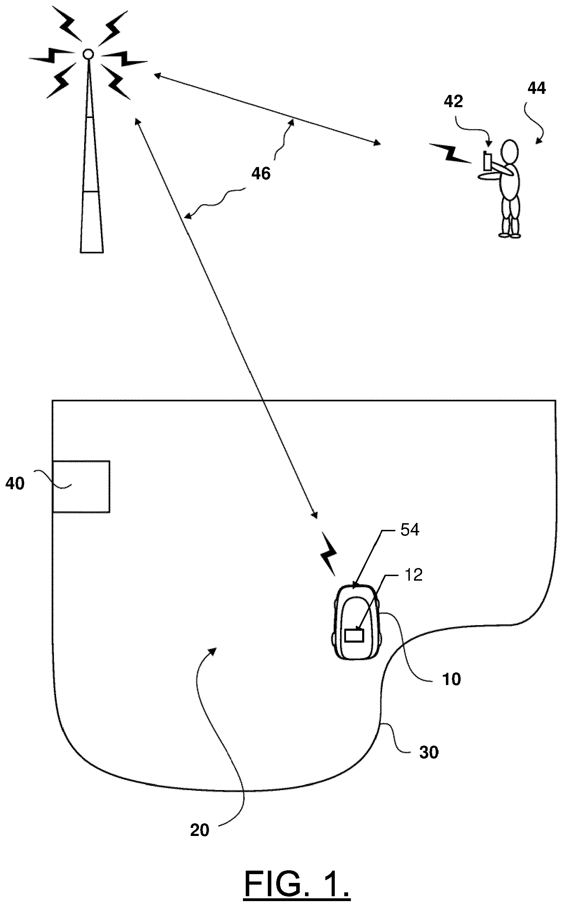

FIG. 1 illustrates an example operating environment for a robotic mower 10 that may employ an example embodiment. However, it should be appreciated that example embodiments may be employed on numerous other robotic vehicles, so the robotic mower 10 should be recognized as merely one example of such a vehicle. The robotic mower 10 may operate to cut grass on a parcel 20 (i.e., a land lot), the boundaries of which may be defined using one or more physical boundaries (e.g., a fence, wall, curb and/or the like), a boundary wire 30, programmed location based boundaries or combinations thereof. The boundary wire 30 may emit electrical signals that are detectable by the robotic mower 10 to inform the robotic mower 10 when a boundary of the parcel 20 has been reached. The robotic mower 10 may be controlled, at least in part, via control circuitry 12 located onboard. The control circuitry 12 may include, among other things, a positioning module and an object detection module, which will be described in greater detail below. Accordingly, the robotic mower 10 may utilize the control circuitry to define a path for coverage of the parcel 20 in terms of performing a task over specified portions or the entire parcel 20 while minimizing the impact and/or number of interactions with objects disposed on the parcel 20. In this regard, the positioning module may be used to guide the robotic mower 10 over the parcel 20 and to ensure that full coverage is obtained, while the object detection module may detect objects and facilitate operation of the robotic mower 10 to avoid damage to the robotic mower 10 and the objects when such objects are detected.

In an example embodiment, the robotic mower 10 may be battery powered via one or more rechargeable batteries. Accordingly, the robotic mower 10 may be configured to return to a charge station 40 that may be located at some position on the parcel 20 in order to recharge the batteries. The batteries may power a drive system and a blade control system of the robotic mower 10. However, the control circuitry 12 of the robotic mower 10 may selectively control the application of power or other control signals to the drive system and/or the blade control system to direct the operation of the drive system and/or blade control system. Accordingly, movement of the robotic mower 10 over the parcel 20 may be controlled by the control circuitry in a manner that enables the robotic mower 10 to systematically traverse the parcel while operating a cutting blade to cut the grass on the parcel 20.

In some embodiments, the control circuitry 12 may be configured to communicate wirelessly with an electronic device 42 (e.g., a computer, mobile telephone, PDA, smart phone, and/or the like) of a remote operator 44 via a wireless communication network 46. However, the wireless network 46 and other remote devices may not be employed in some embodiments. The wireless network 46 may be a data network, such as a local area network (LAN), a metropolitan area network (MAN), a wide area network (WAN) (e.g., the Internet), and/or the like, which may couple the robotic mower 10 to devices such as processing elements (e.g., personal computers, server computers or the like) or databases. Communication between the wireless network 46 and the devices or databases (e.g., servers, electronic device 42, control circuitry 12) may be accomplished by either wireline or wireless communication mechanisms and corresponding protocols.

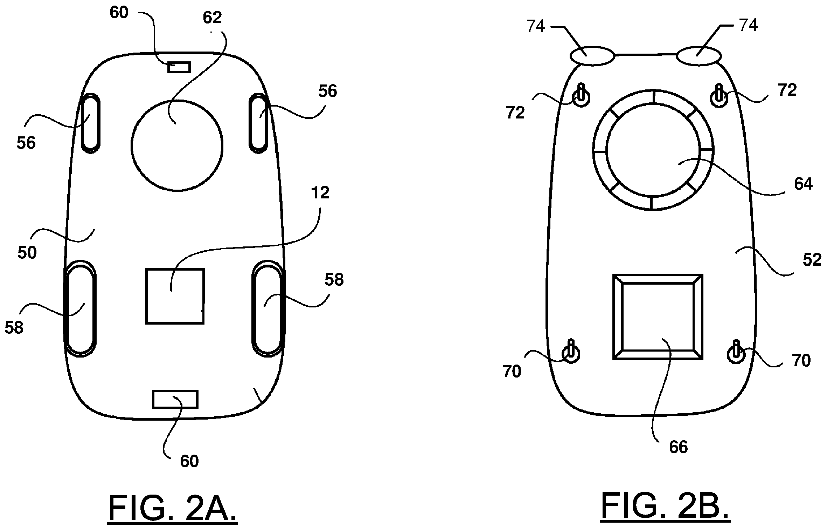

FIG. 2, which includes FIGS. 2A and 2B, illustrates some of the parts that may be employed in connection with an example of the robotic mower 10. However, it should be appreciated that example embodiments may be employed on numerous other vehicles that may employ different designs. As such, components described may be excluded in some embodiments and/or additional components may be provided. Moreover, the locations of some components may be moved in some embodiments. FIG. 2A illustrates a schematic view of a base plate and various components of the robotic mower according to an example embodiment and FIG. 2B illustrates a schematic view of an inner housing and various other components of the robotic mower according to an example embodiment.

Referring to FIGS. 1 and 2, the robotic mower 10 may include a base plate 50, an inner housing 52 and an outer housing 54. The inner housing 52 may be configured to be arranged on top of the base plate 50 and the outer housing 54 may be configured to be arranged on top of the inner housing 52. The base plate 50 may form a support structure from which one or more front wheels 56 and one or more rear wheels 58 may be supported. In some embodiments, the one or more rear wheels 58 may be relatively large as compared to the one or more front wheels 56. Moreover, the one or more rear wheels 58 may be configured to operate either in a forward or backward direction, but may otherwise not be steerable. However, the one or more front wheels 56 may be steerable responsive to control by the control circuitry 12. Alternatively, the front wheels 56 may be swivel wheels capable of following any direction as required by the control of the rear wheels 58.

In an example embodiment, the base plate 50 may further include one or more sensors 60 that may be used to detect the boundary wire 30 and/or objects that may form part of the boundary of the parcel. The sensors 60 may also detect objects that may be encountered during operation of the robotic mower 10 within the boundaries of the parcel 20. These objects may be fixed or temporary (e.g., movable) objects. In some cases, the sensors 60 may include a front sensor and a rear sensor. However, it should be appreciated that any number of sensors may be employed and they may be disposed at any desirable location on the robotic mower 10. The sensors 60 may include sensors related to positional determination (e.g., a GPS receiver, an accelerometer, a camera, a radar transmitter/detector, an ultrasonic sensor, a laser scanner and/or the like). Thus, for example, positional determinations may be made using GPS, inertial navigation, optical flow, radio navigation, visual location (e.g., VSLAM) and/or other positioning techniques or combinations thereof. Accordingly, the sensors 60 may be used, at least in part, for determining the location of the robotic mower 10 relative to boundaries or other points of interest (e.g., a starting point or other key features) of the parcel 20, or determining a position history or track of the robotic mower 10 overtime.

The base plate 50 may further support a cutting motor 62 configured to drive a cutting blade or other cutters of the robotic mower 10. In some embodiments, the outer housing 54 and the inner housing 52 may be plastic, light metal, or other similarly lightweight components. The inner housing 52 may include a cover 64 for the cutting motor 62. In some embodiments, a user interface (e.g., display 66) may be provided on the inner housing 3. The user interface may be employed to interface with the control circuitry 12 for controlling operations of the robotic mower 10.

In some embodiments, the sensors 60 may include sensors specifically provided for detecting objects (other than the boundary wire 30 or objects forming boundaries of the parcel 20) and/or sensors for detecting lifting (or tipping beyond a threshold amount) of the robotic mower 10. Alternatively, separate sensors (e.g., collision sensors 70 and lifting sensors 72) may be provided for each function, and those sensors may be capable of communicating with the control circuitry 12 in addition to the sensors 60. The collision sensors 70 may be an example of a contact sensor that may be employed in connection with an example embodiment. However, as stated above, some embodiments may also employ contactless sensors. As such, in some embodiments, ultrasonic sensors 74 may be provided at a portion of the robotic mower 10. In an example embodiment, the ultrasonic sensors 74 may be positioned at a forward portion of the robotic mower 10 to detect objects a distance in front of the robotic mower 10. However, ultrasonic sensors 74 may also be positioned in other locations in other embodiments.

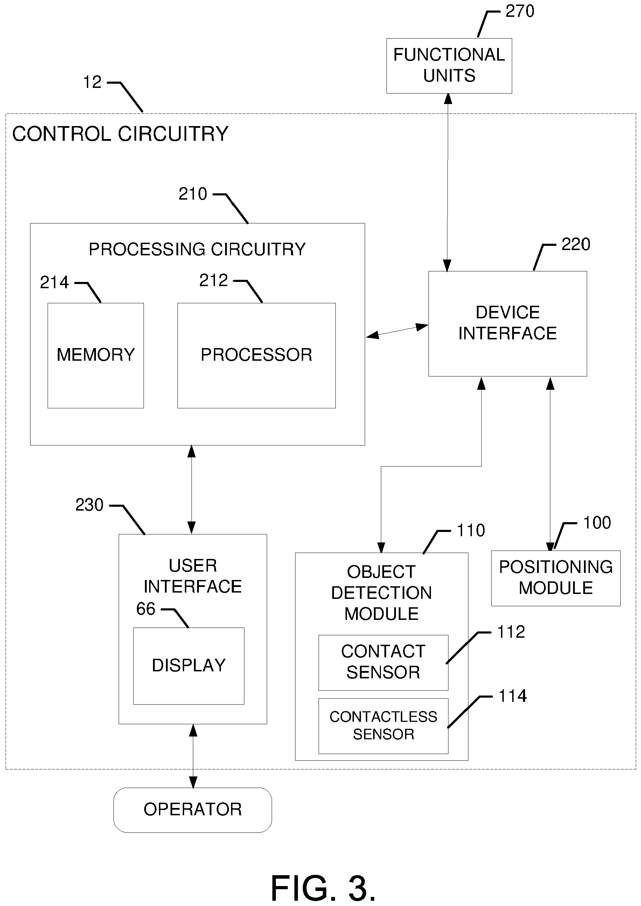

FIG. 3 illustrates a block diagram of various components of the control circuitry 12 to illustrate some of the components that enable the functional performance of the robotic mower 10 and to facilitate description of an example embodiment. In some example embodiments, the control circuitry 12 may include or otherwise be in communication with positioning module 100 and an object detection module 110 disposed at the robotic mower 10. As such, for example, the functions attributable to the positioning module 100 and/or the object detection module 110 may be carried out by the control circuitry 12.

The control circuitry 12 may include processing circuitry 210 that may be configured to perform data processing, control function execution and/or other processing and management services according to an example embodiment of the present invention. In some embodiments, the processing circuitry 210 may be embodied as a chip or chip set. In other words, the processing circuitry 210 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 210 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 210 may include one or more instances of a processor 212 and memory 214 that may be in communication with or otherwise control a device interface 220 and, in some cases, a user interface 230 (e.g., display 66). As such, the processing circuitry 210 may be embodied as a circuit chip (e.g., an integrated circuit chip) configured (e.g., with hardware, software or a combination of hardware and software) to perform operations described herein. However, in some embodiments, the processing circuitry 210 may be embodied as a portion of an on-board computer. In some embodiments, the processing circuitry 210 may communicate with electronic components and/or sensors (e.g., collision sensors 70 and/or ultrasonic sensors 74) of the robotic mower 10 via a single data bus. As such, the data bus may connect to a plurality or all of the switching components and/or other electrically controlled components of the robotic mower 10.

The processor 212 may be embodied in a number of different ways. For example, the processor 212 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 212 may be configured to execute instructions stored in the memory 214 or otherwise accessible to the processor 212. As such, whether configured by hardware or by a combination of hardware and software, the processor 212 may represent an entity (e.g., physically embodied in circuitry - in the form of processing circuitry 210) capable of performing operations according to embodiments of the present invention while configured accordingly. Thus, for example, when the processor 212 is embodied as an ASIC, FPGA or the like, the processor 212 may be specifically configured hardware for conducting the operations described herein. Alternatively, as another example, when the processor 212 is embodied as an executor of software instructions, the instructions may specifically configure the processor 212 to perform the operations described herein.

In an example embodiment, the processor 212 (or the processing circuitry 210) may be embodied as, include or otherwise control the positioning module 100 and the object detection module 110. As such, in some embodiments, the processor 212 (or the processing circuitry 210) may be said to cause each of the operations described in connection with the positioning module 100 and the object detection module 110 by directing the positioning module 100 and the object detection module 110, respectively, to undertake the corresponding functionalities responsive to execution of instructions or algorithms configuring the processor 212 (or processing circuitry 210) accordingly.

In an exemplary embodiment, the memory 214 may include one or more non-transitory memory devices such as, for example, volatile and/or non-volatile memory that may be either fixed or removable. The memory 214 may be configured to store information, data, applications, instructions or the like for enabling the positioning module 100 and/or the object detection module 110 to carry out various functions in accordance with exemplary embodiments of the present invention. For example, the memory 214 could be configured to buffer input data for processing by the processor 212. Additionally or alternatively, the memory 214 could be configured to store instructions for execution by the processor 212. As yet another alternative, the memory 214 may include one or more databases that may store a variety of data sets responsive to input from the sensor network. Among the contents of the memory 214, applications may be stored for execution by the processor 212 in order to carry out the functionality associated with each respective application. In some cases, the applications may include an algorithm for measuring a number and/or rate of false detects or high speed collisions (i.e., uncorroborated detection events - object detection events that are occur on only one but not both of the contact sensor and contactless sensor) and determining whether to adjust sensitivity based on the measurement. The algorithm may further include instructions for adjusting sensitivity of contactless sensors according to predetermined strategies as described herein, or a separate algorithm may be employed to execute such functionality.

The user interface 230 (if implemented) may be in communication with the processing circuitry 210 to receive an indication of a user input at the user interface 230 and/or to provide an audible, visual, mechanical or other output to the user. As such, the user interface 230 may include, for example, a display (e.g., display 66), one or more buttons or keys (e.g., function buttons), and/or other input/output mechanisms (e.g., microphone, speakers, cursor, joystick, lights and/or the like).

The device interface 220 may include one or more interface mechanisms for enabling communication with other devices either locally (e.g., sensors of a sensor network and/or other accessories or functional units 270 such as motors, servos, switches or other operational control devices for automatic responses) or remotely (e.g., electronic device 42). In some cases, the device interface 220 may be any means such as a device or circuitry embodied in either hardware, or a combination of hardware and software that is configured to receive and/or transmit data from/to sensors in communication with the processing circuitry 210. In some example embodiments, the device interface 220 may provide interfaces for communication of components internal to a positioning module 100 and/or an object detection module 110 (as shown in the example of FIG. 3). Automatic responses such as operational control functions that implement automatic actions to be taken responsive to detection of certain stimuli may also be provided via the device interface 220 and the processing circuitry 210. For example, shutdown of the cutting motor 62 (e.g., responsive to tipping or lifting of the robotic mower 10), stopping movement or changing direction of the robotic mower 10 (e.g., responsive to encountering an object or boundary) may be initiated under control of the processing circuitry 210 via interfaces provided by the device interface 220. In this regard, as another example, if an object is detected by the ultrasonic sensor 74 of the object detection module 110, the processing circuitry 210 may be configured to instruct the positioning module 100 to reduce the speed of the robotic mower 10 as an automatic response to object detection via the ultrasonic sensor 74. Additionally or alternatively, interactions implemented via the provision of control signals to the functional units 270 may be initiated via the device interface 220.

In embodiments employing a sensor network, some sensors of the sensor network may be a portion of the object detection module 110 and may include one or more contact sensors 112 (e.g., collision sensors 70) and one or more contactless sensors 114 (e.g., ultrasonic sensor 74) disposed at any of various locations on the robotic mower 10. Other sensors may also be included as a portion of the positioning module 100 to, for example, determine vehicle speed/direction, vehicle location, vehicle orientation and/or the like. Sensors may also be used to determine motor run time, machine work time, and other operational parameters. In some embodiments, positioning and/or orientation sensors (e.g., global positioning system (GPS) receiver and/or accelerometer) may be included to monitor, display and/or record data regarding vehicle position and/or orientation.

The positioning module 100 may be configured to utilize one or more sensors to determine a location of the robotic mower 10 and direct continued motion of the robotic mower 10 to achieve appropriate coverage of the parcel 20. As such, the robotic mower 100 (or more specifically, the control circuitry 12) may use the location information to determine a mower track and provide full coverage of the parcel 20 to ensure the entire parcel is mowed. The positioning module 100 may therefore be configured to direct movement of the robotic mower 10, including the speed of the robotic mower 10. During normal operation, the positioning module 100 may define a relatively high speed at which the robotic mower 10 may proceed. However, in response to object detection via the contactless sensor 114 (and perhaps also responsive to other stimuli), the positioning module 100 may direct the robotic mower 10 to slow to a lower speed.

The object detection module 110 may employ the contact sensor 112 (or sensors) and/or the contactless sensor 114 (or sensors) to determine when an object is detected. When an object is detected, the processing circuitry 210 and/or the positioning module 100 may be informed. In an example embodiment, if the initial detection of an object is accomplished via the contactless sensor 114, the processing circuitry 210 and/or the positioning module 100 may be informed so that the positioning module 100 can initiate slowing of the robotic mower 10 responsive to detection of the object so that any impact between the object and the robotic mower 10 will have less impact. Moreover, when an indication is received from the object detection module 110 to inform the processing circuitry 210 (and/or positioning module 100) that the object has been detected by the contactless sensor 114, the processing circuitry 210 may also record the contactless detection event to determine whether a corresponding contact detection also occurs (e.g., within a predetermined period of time or before travelling the distance to the object discovered by the contactless sensor 114) with the contact sensor 112. If no corresponding contact detection occurs (e.g., within the predetermined time), then the contactless detection may be counted as a false detection. The positioning module 100 may also be free to direct resumption of a higher driving speed.

If a corresponding contact detection occurs for the contactless detection, then the series of detections (i.e., the contactless and contact detection pair) may be discarded or recorded as a correlated detection event. In some embodiments, the processing circuitry 210 may record the false detection events or simply track the number of false detection events to determine whether the number of false detection events has achieved a threshold or predetermined number (which could be any desirable positive integer). In response to the number of false detection events reaching the threshold number, a sensitivity adjustment may be accomplished by the processing circuitry 210 to adjust the sensitivity level of the contactless sensor 114. In particular, the processing circuitry 210 may be configured to lower the sensitivity so that the number of false detections is expected to decrease. The sensitivity adjustment could be a gain adjustment for amplifier circuitry of the contactless sensor 114 or any other suitable electronic adjustment to generate either more or fewer detections based on the conditioning and/or processing applied to return signals. It can also be adjustments to software algorithms used when processing the received signal from the contactless sensors so that, for example, a particular amplitude level is set as a threshold to determine whether a received echo that is considered an object or not.

After the processing circuitry 210 directs execution of a sensitivity adjustment, the count may be reset. However, it should also be appreciated that the number of false detections may be tracked relative to the threshold within a given period of time. In other words, the decision whether to initiate a sensitivity adjustment may not be made merely on the total number of false detections encountered since the last sensitivity adjustment or during a particular operation sequence since the robotic mower 10 has left its charge station 40. Instead, a time component may also be introduced so that the rate of false detections can be measured and the sensitivity adjustment is triggered when a threshold rate of false detections is achieved (e.g., a given number within a set period of time). In some cases, if the threshold number or the given number of false detections is not reached in the set period of time, the count may be reset. It should also be appreciated that one could count down from a threshold number instead of counting up to the threshold number and achieve the same effect relative to triggering the sensitivity adjustment.

In some embodiments, if no false detections are encountered over a given period of time, it may also be desirable to increase sensitivity. Thus, in some embodiments, if no false detections occur within a given period of time (or if fewer than a selected number of false detections occur within the given period of time), then the processing circuitry 210 may be configured to increase the sensitivity. Accordingly, in some cases, the processing circuitry 210 may be configured to automatically control sensitivity within a range to achieve a reasonable number of false detections to ensure that the sensitivity is neither too high nor too low. In other words, the processing circuitry 210 may be configured to reduce sensitivity in response to exceeding a maximum threshold (i.e., going over or above the maximum threshold) or increasing sensitivity in response to exceeding a minimum threshold (i.e., going below or lower than the minimum threshold. However, some embodiments may also adjust sensitivity based on contact sensor 112 collisions that occur without a preceding contactless sensor 114 detection. In this regard, for example, if the sensitivity is set too low, the contactless sensor 114 may not detect an object and then a high speed collision may occur with the object, which collision may be noted by the contact sensor 112. If one (or a predetermined number or rate) of such high speed collisions occurs, then the sensitivity of the contactless sensor 114 may be increased. Improved efficiency may therefore be achieved by optimally setting sensitivity of the contactless sensor 114.

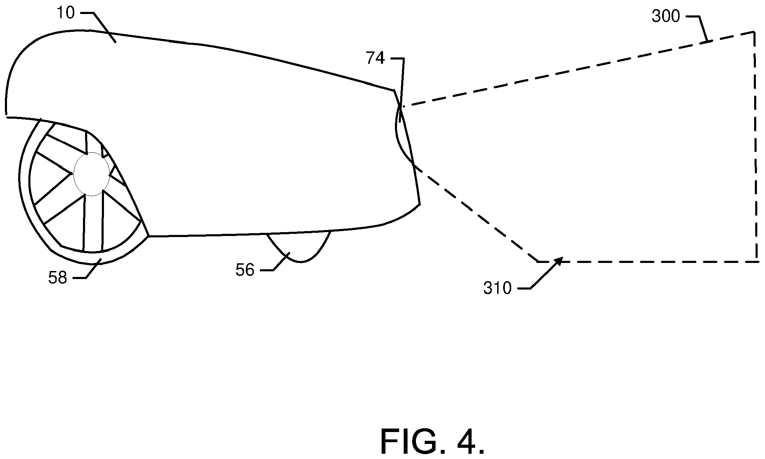

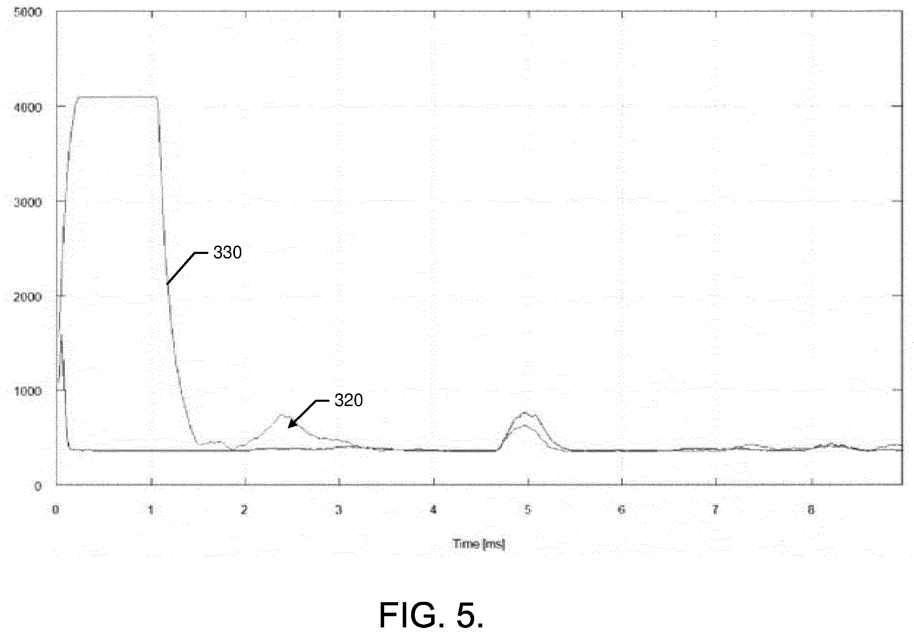

FIG. 4 illustrates a side view of the robotic vehicle 10 to show the radiation pattern of a contactless sensor in accordance with an example embodiment and FIG. 5 illustrates a graph of return signal data that may be obtained from contactless sensors to illustrate an example embodiment. As may be appreciated from FIG. 4, if the ultrasonic sensor 74 is placed on top of the robotic vehicle 10, the emitted energy would likely be emitted above the ground so that small objects or objects that are relatively low to the ground may not be detected. Thus, the robotic vehicle 10 could potentially strike such an object at a high speed and damage the object or the robotic vehicle 10. However, the ultrasonic sensor 74 of an example embodiment is located at a front portion of the robotic vehicle 10 and relatively low to the ground.

Accordingly, as shown in FIG. 4, a radiation or emission pattern 300 may be projected out in front of the robotic vehicle 10 in which objects may be detected by virtue of the ultrasonic sensor 74 receiving reflected emissions that reflect off the objects. Between bursts in which emissions are generated, reflections are detected. The ultrasonic sensor 74 may include hardware and/or software that is configured to filter returns to detect objects. With sensors placed relatively low, a portion of the emission pattern 300 includes signals directed toward the ground (e.g., in region 310). This may cause a relatively large amount of reflection close in to the robotic mower 10, and the returns may therefore be received relatively quickly and show up as a false detection 320 on first return signal line 330 of FIG. 5. This is an example of a false detection, and this kind of ground echoes can more or less common depending on how well kept the lawn is, as well as the moisture level in the lawn. Thus the mower needs to have a adjusted sensitivity level to ignore the ground echo but discover the echo from real objects. However, when the sensitivity is lowered to an appropriate level to eliminate the false detection, a better operational response may be achieved from the ultrasonic sensor 74 and the robotic vehicle 10.

In some cases, the number of false detections may depend on the condition of the lawn and moisture content. A well kept and even lawn may have less false detections and dry conditions may also result in lower numbers or rates of false detections. Accordingly, the amount of false detections (i.e., detections on the contactless sensor 114 that are not corroborated by the contact sensor 112) may vary normally. Thus, an automatic adjustment capability may be of substantial utility rather than trying to set some value in the factory. Example embodiments may provide a robust capability for making sensitivity adjustments based on observable performance characteristics.

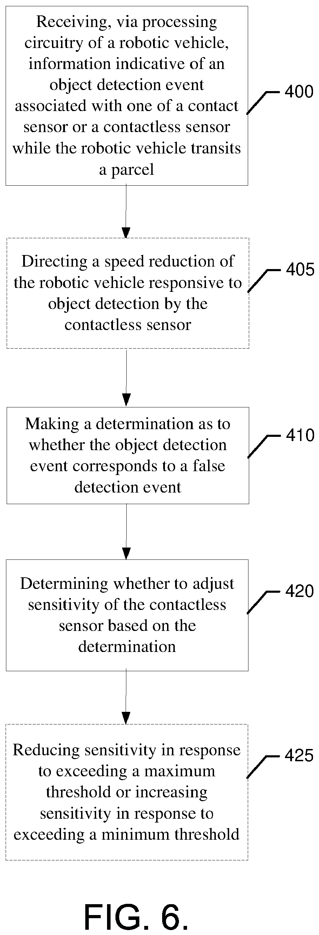

Embodiments of the present invention may therefore be practiced using an apparatus such as the one depicted in FIG. 3. However, other embodiments may be practiced in connection with a computer program product for performing embodiments of the present invention. As such, for example, each block or step of the flowcharts of FIG. 6, and combinations of blocks in the flowchart, may be implemented by various means, such as hardware, firmware, processor, circuitry and/or another device associated with execution of software including one or more computer program instructions. Thus, for example, one or more of the procedures described above may be embodied by computer program instructions, which may embody the procedures described above and may be stored by a storage device (e.g., memory 214) and executed by processing circuitry (e.g., processor 212).

As will be appreciated, any such stored computer program instructions may be loaded onto a computer or other programmable apparatus (i.e., hardware) to produce a machine, such that the instructions which execute on the computer or other programmable apparatus implement the functions specified in the flowchart block(s) or step(s). These computer program instructions may also be stored in a computer-readable medium comprising memory that may direct a computer or other programmable apparatus to function in a particular manner, such that the instructions stored in the computer-readable memory produce an article of manufacture including instructions to implement the function specified in the flowchart block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowchart block(s) or step(s). In this regard, a method according to example embodiments of the invention may include any or all of the operations shown in FIG. 6. Moreover, other methods derived from the descriptions provided herein may also be performed responsive to execution of steps associated with such methods by a computer programmed to be transformed into a machine specifically configured to perform such methods.

In an example embodiment, a method for processing object detection-related information, as shown in FIG. 6, may include receiving, via processing circuitry of a robotic vehicle, information indicative of an object detection event associated with one of a contact sensor or a contactless sensor while the robotic vehicle transits a parcel at operation 400. The method may further include making a determination as to whether the object detection event corresponds to a false detection event at operation 410, and determining whether to adjust sensitivity of the contactless sensor based on the determination at operation 420.

In some cases, the method may include additional optional operations, some examples of which are shown in dashed lines in FIG. 6. For example, the method may further include directing a speed reduction of the robotic vehicle responsive to object detection by the contactless sensor at operation 405. Alternatively or additionally, the method may include reducing sensitivity in response to the threshold being a maximum defined threshold or increasing sensitivity in response to the threshold being a minimum defined threshold at operation 425.

The operations 400-425 may also be modified, augmented or amplified in some cases. For example, in some embodiments, making the determination may include determining that the false detection event occurs responsive to receiving an indication of the object detection event from the contactless sensor and not receiving a corresponding detection event indication from the contact sensor within a predetermined period of time (or a traveled distance) from the indication of the object detection event. Alternatively or additionally, making the determination may include determining that the false detection event occurs responsive to receiving an indication of the object detection event from the contact sensor and not receiving a prior detection event indication from the contactless sensor within a predetermined period of time from the indication of the object detection event. In some embodiments, determining whether to adjust sensitivity may include incrementing a count of false detection events in response to determining that the false detection event occurs, and adjusting sensitivity in response to the count exceeding a threshold. Alternatively or additionally, determining whether to adjust sensitivity may include determining a rate of false detection events in response to determining that the false detection event occurs, and adjusting sensitivity in response to the rate exceeding a threshold.

In an example embodiment, an apparatus for performing the method of FIG. 6 above may comprise a processor (e.g., the processor 212) configured to perform some or each of the operations (400-425) described above. The processor 212 may, for example, be configured to perform the operations (400-425) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 400-425 may comprise, for example, the control circuitry 12. Additionally or alternatively, at least by virtue of the fact that the processor 212 may be configured to control or even be embodied as the control circuitry 12, the processor 212 and/or a device or circuitry for executing instructions or executing an algorithm for processing information as described above may also form example means for performing operations 400-425.

## Claims

1. A robotic lawnmower (10) comprising:
a positioning module (100) configured to direct movement of the robotic lawnmower (10); and
an object detection module (110) configured to detect objects proximate to the robotic lawnmower (10), the object detection module (110) comprising a contact sensor (112) and a contactless sensor (114),
wherein sensitivity of the contactless sensor (114) of the object detection module (110) is configured to be automatically adjustable based on input from the contact sensor (112).

2. The robotic lawnmower (10) of claim 1, wherein the positioning module (100) is configured to slow a speed of movement of the robotic lawnmower (10) responsive to object detection by the contactless sensor (114).

3. The robotic lawnmower (10) of claim 2, wherein the object detection module (110) is configured for:
receiving information indicative of an object detection event associated with one of the contact sensor (112) or the contactless sensor (114) while the robotic lawnmower (10) transits a parcel;
making a determination as to whether the object detection event corresponds to a false detection event; and
determining whether to adjust sensitivity of the contactless sensor (114) based on the determination.

4. The robotic lawnmower (10) of claim 3, wherein making the determination comprises determining that the false detection event occurs responsive to receiving an indication of the object detection event from the contactless sensor (114) and not receiving a corresponding detection event indication from the contact sensor (112) within a predetermined period of time or traveled distance from the indication of the object detection event.

5. The robotic lawnmower (10) of claim 3, wherein making the determination comprises determining that the false detection event occurs responsive to receiving an indication of the object detection event from the contact sensor (112) and not receiving a prior detection event indication from the contactless sensor (114) within a predetermined period of time from the indication of the object detection event.

6. The robotic lawnmower (10) of claim 4 or 5, wherein determining whether to adjust sensitivity comprises incrementing a count of false detection events in response to determining that the false detection event occurs, and adjusting sensitivity in response to the count exceeding a threshold.

7. The robotic lawnmower (10) of claim 4 or 5, wherein determining whether to adjust sensitivity comprises determining a rate of false detection events in response to determining that the false detection event occurs, and adjusting sensitivity in response to the rate exceeding a threshold.

8. The robotic lawnmower (10) of claim 6 or 7, further comprising reducing sensitivity in response to the threshold being a maximum defined threshold.

9. The robotic lawnmower (10) of claim 6 or 7, further comprising increasing sensitivity in response to the threshold being exceeded by being below a minimum defined threshold.

10. A method comprising:
receiving (400), via processing circuitry of a robotic lawnmower (10), information indicative of an object detection event associated with one of a contact sensor (112) or a contactless sensor (114) while the robotic lawnmower (10) transits a parcel;
making (410) a determination as to whether the object detection event corresponds to a false detection event;
determining (420) whether to adjust sensitivity of the contactless sensor (114) based on the determination; and
adjusting the sensitivity of the contactless sensor (114) according to the determination whether to adjust sensitivity of the contactless sensor (114).

11. The method of claim 10, further comprising directing (405) a speed reduction of the robotic lawnmower (10) responsive to object detection by the contactless sensor (114).

12. The method of claim 11, wherein making (410) the determination comprises determining that the false detection event occurs responsive to receiving an indication of the object detection event from the contactless sensor (114) and not receiving a corresponding detection event indication from the contact sensor (112) within a predetermined period of time or traveled distance from the indication of the object detection event.

13. The method of claim 10, wherein making (410) the determination comprises determining that the false detection event occurs responsive to receiving an indication of the object detection event from the contact sensor (112) and not receiving a prior detection event indication from the contactless sensor (114).

14. The method of claim 12 or 13, wherein determining (420) whether to adjust sensitivity comprises incrementing a count of false detection events in response to determining that the false detection event occurs, and adjusting sensitivity in response to the count exceeding a threshold.

15. The method of claim 12 or 13, wherein determining (420) whether to adjust sensitivity comprises determining a rate of false detection events in response to determining that the false detection event occurs, and adjusting sensitivity in response to the rate exceeding a threshold.

16. The method of claim 14 or 15, further comprising reducing (425) sensitivity in response to the threshold being a maximum defined threshold.

17. The method of claim 14 or 15 further comprising increasing (425) sensitivity in response to the threshold being exceeded by being below a minimum defined threshold.

## Patentansprüche

1. Mähroboter (10), umfassend:
ein Positionierungsmodul (100), das konfiguriert ist, um die Bewegung des Mähroboters (10) zu steuern; und
ein Objekterfassungsmodul (110), das konfiguriert ist, um Objekte in der Nähe des Mähroboters (10) zu erfassen, wobei das Objekterfassungsmodul (110) einen Kontaktsensor (112) und einen kontaktlosen Sensor (114) umfasst,
wobei die Empfindlichkeit des kontaktlosen Sensors (114) des Objekterfassungsmoduls (110) konfiguriert ist, um basierend auf der Eingabe von dem Kontaktsensor (112) automatisch anpassbar zu sein.

2. Mähroboter (10) nach Anspruch 1, wobei das Positionierungsmodul (100) konfiguriert ist, um eine Bewegungsgeschwindigkeit des Mähroboters (10) als Reaktion auf die Objekterfassung durch den kontaktlosen Sensor (114) zu verlangsamen.

3. Mähroboter (10) nach Anspruch 2, wobei das Objekterfassungsmodul
(110) konfiguriert ist zum:
Empfangen von Informationen, die ein Objekterfassungsereignis anzeigen, das entweder dem Kontaktsensor (112) oder dem kontaktlosen Sensor (114) zugeordnet ist, während der Mähroboter (10) eine Parzelle durchfährt;
Durchführen einer Bestimmung, ob das Objekterfassungsereignis einem falschen Erfassungsereignis entspricht; und
Bestimmen, ob die Empfindlichkeit des kontaktlosen Sensors (114) auf der Grundlage der Bestimmung angepasst werden soll.

4. Mähroboter (10) nach Anspruch 3, wobei das Durchführen der Bestimmung das Bestimmen umfasst, dass das falsche Erfassungsereignis als Reaktion auf das Empfangen einer Anzeige des Objekterfassungsereignisses von dem kontaktlosen Sensor (114) und das Nicht-Empfangen einer entsprechenden Erfassungsereignisanzeige von dem Kontaktsensor (112) innerhalb eines vorbestimmten Zeitraums oder einer zurückgelegten Entfernung von der Anzeige des Objekterfassungsereignisses auftritt.

5. Mähroboter (10) nach Anspruch 3, wobei das Durchführen der Bestimmung das Bestimmen umfasst, dass das falsche Erfassungsereignis als Reaktion auf das Empfangen einer Anzeige des Objekterfassungsereignisses von dem Kontaktsensor (112) und das Nicht-Empfangen einer vorherigen Erfassungsereignisanzeige von dem kontaktlosen Sensor (114) innerhalb eines vorbestimmten Zeitraums ab der Anzeige des Objekterfassungsereignisses auftritt.

6. Mähroboter (10) nach Anspruch 4 oder 5, wobei das Bestimmen, ob die Empfindlichkeit angepasst werden soll, das Inkrementieren einer Zählung falscher Erfassungsereignisse als Reaktion auf das Bestimmen, dass das falsche Erfassungsereignis auftritt, und das Anpassen der Empfindlichkeit als Reaktion darauf, dass die Zählung einen Schwellenwert überschreitet, umfasst.

7. Mähroboter (10) nach Anspruch 4 oder 5, wobei das Bestimmen, ob die Empfindlichkeit angepasst werden soll, das Bestimmen einer Rate falscher Erfassungsereignisse als Reaktion auf das Bestimmen, dass das falsche Erfassungsereignis auftritt, und das Anpassen der Empfindlichkeit als Reaktion darauf, dass die Rate einen Schwellenwert überschreitet, umfasst.

8. Mähroboter (10) nach Anspruch 6 oder 7, ferner umfassend die Verringerung der Empfindlichkeit als Reaktion darauf, dass der Schwellenwert ein maximal definierter Schwellenwert ist.

9. Mähroboter (10) nach Anspruch 6 oder 7, ferner umfassend eine Erhöhung der Empfindlichkeit als Reaktion darauf, dass der Schwellenwert dadurch überschritten wird, dass er unter einem definierten Mindestschwellenwert liegt.

10. Verfahren, umfassend:
Empfangen (400) von Informationen über eine Verarbeitungsschaltung eines Mähroboters (10), die ein Objekterfassungsereignis anzeigen, das entweder einem Kontaktsensor (112) oder einem kontaktlosen Sensor (114) zugeordnet ist, während der Mähroboter (10) eine Parzelle durchfährt;
Durchführen (410) einer Bestimmung, ob das Objekterfassungsereignis einem falschen Erfassungsereignis entspricht;
Bestimmen (420), ob die Empfindlichkeit des kontaktlosen Sensors (114) auf der Grundlage der Bestimmung angepasst werden soll; und
Anpassen der Empfindlichkeit des kontaktlosen Sensors (114) gemäß der Bestimmung, ob die Empfindlichkeit des kontaktlosen Sensors (114) angepasst werden soll.

11. Verfahren nach Anspruch 10, ferner umfassend das Anweisen (405) einer Geschwindigkeitsverringerung des Mähroboters (10) als Reaktion auf die Objekterfassung durch den kontaktlosen Sensor (114).

12. Verfahren nach Anspruch 11, wobei das Durchführen (410) der Bestimmung das Bestimmen umfasst, dass das falsche Erfassungsereignis als Reaktion auf das Empfangen einer Anzeige des Objekterfassungsereignisses von dem kontaktlosen Sensor (114) und das Nicht-Empfangen einer entsprechenden Erfassungsereignisanzeige von dem Kontaktsensor (112) innerhalb eines vorbestimmten Zeitraums oder einer zurückgelegten Entfernung ab der Anzeige des Objekterfassungsereignisses auftritt.

13. Verfahren nach Anspruch 10, wobei das Durchführen (410) der Bestimmung das Bestimmen umfasst, dass das falsche Erfassungsereignis als Reaktion auf das Empfangen einer Anzeige des Objekterfassungsereignisses von dem Kontaktsensor (112) und das Nicht-Empfangen einer vorherigen Erfassungsereignisanzeige von dem kontaktlosen Sensor (114) auftritt.

14. Verfahren nach Anspruch 12 oder 13, wobei das Bestimmen (420), ob die Empfindlichkeit angepasst werden soll, das Inkrementieren einer Zählung falscher Erfassungsereignisse als Reaktion auf das Bestimmen, dass das falsche Erfassungsereignis auftritt, und das Anpassen der Empfindlichkeit als Reaktion darauf, dass die Zählung einen Schwellenwert überschreitet, umfasst.

15. Verfahren nach Anspruch 12 oder 13, wobei das Bestimmen (420), ob die Empfindlichkeit angepasst werden soll, das Bestimmen einer Rate von falschen Erfassungsereignissen als Reaktion auf das Bestimmen, dass das falsche Erfassungsereignis auftritt, und das Anpassen der Empfindlichkeit als Reaktion darauf, dass die Rate einen Schwellenwert überschreitet, umfasst.

16. Verfahren nach Anspruch 14 oder 15, ferner umfassend das Verringern (425) der Empfindlichkeit als Reaktion darauf, dass der Schwellenwert ein maximal definierter Schwellenwert ist.

17. Verfahren nach Anspruch 14 oder 15, ferner umfassend das Erhöhen (425) der Empfindlichkeit als Reaktion darauf, dass der Schwellenwert dadurch überschritten wird, dass er unter einem definierten Mindestschwellenwert liegt.

## Revendications

1. Tondeuse à gazon robotisée (10) comprenant :
un module de positionnement (100) configuré pour diriger le mouvement de la tondeuse à gazon robotisée (10) ; et
un module de détection d'objet (110) configuré pour détecter des objets à proximité de la tondeuse à gazon robotisée (10), le module de détection d'objet (110) comprenant un capteur de contact (112) et un capteur sans contact (114),
dans laquelle la sensibilité du capteur sans contact (114) du module de détection d'objet (110) est configuré pour être automatiquement ajustable en fonction de l'entrée du capteur de contact (112).

2. Tondeuse à gazon robotisée (10) selon la revendication 1, dans laquelle le module de positionnement (100) est configuré pour ralentir une vitesse de déplacement de la tondeuse à gazon robotisée (10) en réponse à la détection d'objet par le capteur sans contact (114).

3. Tondeuse à gazon robotisée (10) selon la revendication 2, dans laquelle le module de détection d'objet (110) est configuré pour :
recevoir des informations indiquant un événement de détection d'objet associé à l'un du capteur de contact (112) ou du capteur sans contact (114) pendant que la tondeuse à gazon robotisée (10) traverse une parcelle ;
déterminer si l'événement de détection d'objet correspond à un événement de fausse détection ; et
déterminer si l'ajustement de la sensibilité du capteur sans contact (114) est nécessaire sur la base de la détermination.

4. Tondeuse à gazon robotisée (10) selon la revendication 3, dans laquelle la détermination comprend la détermination que l'événement de fausse détection se produit en réponse à la réception d'une indication d'événement de détection d'objet à partir du capteur sans contact (114) et à la non réception d'une indication d'événement de détection correspondante à partir du capteur de contact (112) dans une période de temps prédéterminée ou à une distance parcourue à partir de l'indication d'événement de détection d'objet.

5. Tondeuse à gazon robotisée (10) selon la revendication 3, dans laquelle la détermination comprend la détermination que l'événement de fausse détection se produit en réponse à la réception d'une indication d'événement de détection d'objet à partir du capteur de contact (112) et à la non réception d'une indication d'événement de détection préalable à partir du capteur sans contact (114) dans une période de temps prédéterminée à partir de l'indication d'événement de détection d'objet.

6. Tondeuse à gazon robotisée (10) selon la revendication 4 ou 5, dans laquelle la détermination de l'ajustement de la sensibilité comprend l'incrémentation d'un compte d'événements de fausse détection en réponse à la détermination que l'événement de fausse détection se produit, et l'ajustement de la sensibilité en réponse au compte dépassant un seuil.

7. Tondeuse à gazon robotisée (10) selon la revendication 4 ou 5, dans laquelle la détermination si l'ajustement de la sensibilité est nécessaire comprend la détermination d'un taux d'événements de fausse détection en réponse à la détermination que l'événement de fausse détection se produit, et l'ajustement de la sensibilité en réponse au taux dépassant un seuil.

8. Tondeuse à gazon robotisée (10) selon la revendication 6 ou 7, comprenant en outre la réduction de la sensibilité en réponse au seuil étant un seuil maximum défini.

9. Tondeuse à gazon robotisée (10) selon la revendication 6 ou 7, comprenant en outre l'augmentation de la sensibilité en réponse au dépassement du seuil en étant inférieur à un seuil minimum défini.

10. Procédé comprenant :
la réception (400), via des circuits de traitement d'une tondeuse à gazon robotisée (10), d'informations indiquant un événement de détection d'objet associé à l'un d'un capteur de contact (112) ou d'un capteur sans contact (114) pendant que la tondeuse à gazon robotisée (10) traverse une parcelle ;
la réalisation (410) d'une détermination pour savoir si l'événement de détection d'objet correspond à un événement de fausse détection ;
la détermination (420) si l'ajustement de la sensibilité du capteur sans contact (114) est nécessaire sur la base de la détermination ; et
l'ajustement de la sensibilité du capteur sans contact (114) en fonction de la détermination si l'ajustement de la sensibilité du capteur sans contact (114) est nécessaire.

11. Procédé selon la revendication 10, comprenant en outre la direction (405) d'une réduction de vitesse de la tondeuse à gazon robotisée (10) en réponse à la détection d'objet par le capteur sans contact (114).

12. Procédé selon la revendication 11, dans lequel la réalisation (410) de la détermination comprend la détermination que l'événement de fausse détection se produit en réponse à la réception d'une indication d'événement de détection d'objet à partir du capteur sans contact (114) et à la non réception d'une indication d'événement de détection correspondante à partir du capteur de contact (112) dans une période de temps prédéterminée ou à une distance parcourue à partir de l'indication d'événement de détection d'objet.

13. Procédé selon la revendication 10, dans lequel la réalisation (410) de la détermination comprend la détermination que l'événement de fausse détection se produit en réponse à la réception d'une indication d'événement de détection d'objet à partir du capteur de contact (112) et à la non réception d'une indication d'événement de détection antérieure à partir du capteur sans contact (114).

14. Procédé selon la revendication 12 ou 13, dans lequel la détermination (420) si l'ajustement de la sensibilité est nécessaire comprend l'incrémentation d'un compte d'événements de fausse détection en réponse à la détermination que l'événement de fausse détection se produit, et l'ajustement de la sensibilité en réponse au compte dépassant un seuil.

15. Procédé selon la revendication 12 ou 13, dans lequel la détermination (420) si l'ajustement de la sensibilité est nécessaire comprend la détermination d'un taux d'événements de fausse détection en réponse à la détermination que l'événement de fausse détection se produit, et l'ajustement de la sensibilité en réponse au taux dépassant un seuil.

16. Procédé selon la revendication 14 ou 15, comprenant en outre la réduction (425) de la sensibilité en réponse au seuil étant un seuil maximum défini.

17. Procédé selon la revendication 14 ou 15, comprenant en outre l'augmentation (425) de la sensibilité en réponse au dépassement du seuil en étant en dessous d'un seuil minimum défini.
